**Europäisches Patentamt**

**European Patent Office**

**Office européen des brevets**

(11) Publication number: **0 175 998**
**B1**

# (12) EUROPEAN PATENT SPECIFICATION

(45) Date of publication of patent specification: **17.05.89**

(21) Application number: **85111429.8**

(22) Date of filing: **30.11.83**

(60) Publication number of the earlier application in accordance with Art. 76 EPC: **0 110 713**

(51) Int. Cl.⁴: **B 05 B 3/10**, A 01 M 7/00

(54) Spraying disc for use in spraying equipment.

(30) Priority: **01.08.83 GB 8320678**

(43) Date of publication of application:
**02.04.86 Bulletin 86/14**

(45) Publication of the grant of the patent:
**17.05.89 Bulletin 89/20**

(84) Designated Contracting States:
**AT BE CH DE FR GB IT LI LU NL SE**

(56) References cited:
**GB-A- 862 742**
**US-A-3 459 586**

(73) Proprietor: **Nomix Manufacturing Co. Limited**
**Fillwood Factory Charlton Road**
**Kingswood Bristol BS15 1HB (GB)**

(72) Inventor: **Gill, David Charles**
**Wellfield House Parkhurst Lane**
**Keynsham Nr. Bristol BS18 2SG (GB)**

(74) Representative: **Cheyne, John Robert Alexander Mackenzie et al**
**HASELTINE LAKE & CO. 28 Southampton Buildings Chancery Lane**
**London WC2A 1AT (GB)**

Courier Press, Leamington Spa, England.

## Description

This invention relates to a spraying disc for use in spraying equipment and particularly, although not exclusively, to equipment for spraying herbicides.

It is becoming increasingly common for herbicides to be applied in the form of oil-based emulsions. Such herbicides are highly efficient and very small quantities, if properly applied, can be used to treat large areas. However, to be effective, the herbicides must be applied in the form of fine droplets of uniform size and distribution. The nature of the herbicide, which is commonly a viscous liquid having a viscosity, for example, of 20—40 centistokes, has made it difficult for this requirement to be met.

Spraying equipment for paints is disclosed in GB—A—862742. The equipment utilises a spraying disc having a fluid receiving surface which has a substantially polygonal outer periphery, the disc being rotatable, in use, about a rotary axis to discharge fluid from the outer periphery of the fluid receiving surface. However, it is difficult, with the known spraying discs, to maintain a regular droplet size around the rotary axis.

According to the present invention different portions of the outer periphery are at different distances from a plane perpendicular to the rotary axis, the fluid-receiving surface meeting, at the outer periphery, a plurality of side surfaces which extend substantially parallel to the rotary axis.

For a better understanding of the present invention, and to show how it may be carried into effect, reference will now be made, by way of example, to the accompanying drawings, in which:

Figure 1 is a perspective view of spraying equipment as described and claimed in my copending European Patent Application No. 83307290.3, Publication No. 0 110 713;

Figure 2 is a partialy sectioned view taken along the line II—II in Figure 1;

Figure 3 is a side view of a spraying disc for use with the spraying head of Figure 1;

Figure 4 is a view taken in the direction of the arrow IV in Figure 3;

Figure 5 is a sectional view of the disc shown in Figures 3 and 4;

Figure 6 is a side view of another form of spraying disc;

Figure 7 is an end view of a third form of spraying disc;

Figure 8 is a partial side view of the disc of Figure 7; and

Figure 9 is a sectional view of the disc of Figures 7 and 8.

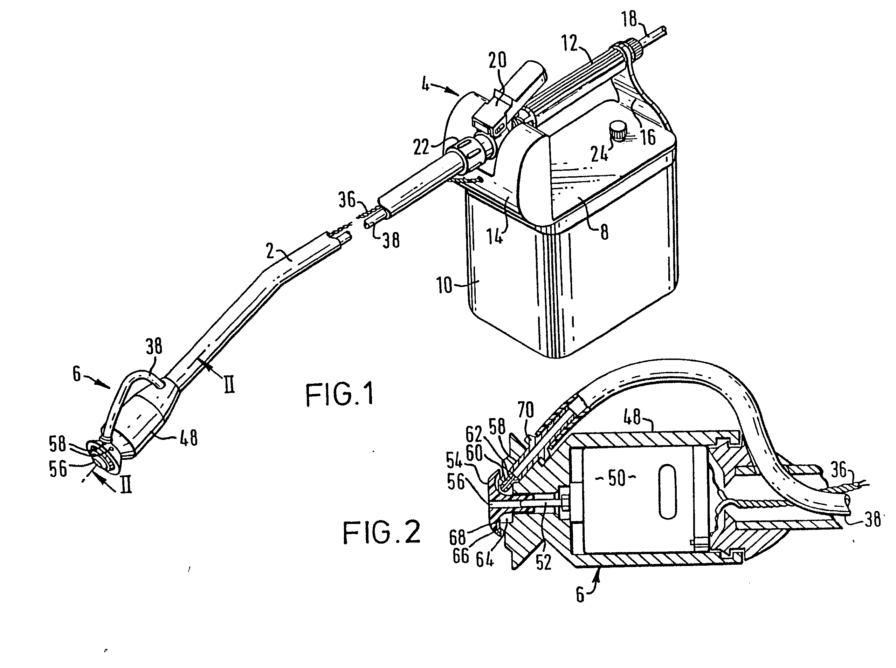

Referring to Figure 1, the spraying equipment comprises a support tube 2 which is connected at one end to a supply assembly 4 and carries at the other end a spraying head 6. The supply assembly 4 comprises a battery carrier 8 to which a battery 10 is connected and which is provided with a hollow handle 12. The handle 12 is mounted between front and rear limbs 14 and 16 of the battery carrier 8 and is connected at its rear end to a fluid supply line 18. Near its front end, the handle 12 is provided with an on/off tap 20, and at its extreme end it is connected to the support tube 2 by a fitting 22. A supply tube 38 communicates with the interior of the handle 12 and consequently with the fluid supply line 18.

The battery 10 is connected to the bracket 8 by terminal nuts 24 (only one of which is visible in Figure 1).

As will be appreciated from Figure 1, both the lead 36 and the supply tube 38 extend down the support tube 2. The lead 36 extends through an opening in the front limb 14 of the bracket 8 and through an opening in the support tube 2.

As shown in Figure 2, the spraying head 6 comprises a body 48 which accommodates an electric motor 50 having an output spindle 52. The lead 36 is connected to the input terminals of the motor 50. The output spindle 52 of the motor carries a rotary spraying disc 54, the spindle 52 being a friction fit within a bore 56 in the disc 54.

The body 48 has three annularly spaced passages 58. Each of these passages is inclined to the axis of the motor 50 such that it extends inwardly and towards the spraying disc 54. At the inner end of each passage 58 there is a jet 60 having a restrictor passage 62. The diameters of the restrictor passages 62 of the jets are different from one another. The restrictor passages 62 open into a cavity 64 in the end of the body 48. An annular chamber is defined between a circumferential wall of the cavity and a shank of the disc 54. The circumferential wall terminates at a lip 66 which defines, with the disc 54, an annular outlet slot 68. The slot 68 is shown greatly enlarged in Figure 2, for the sake of clarity. The width of the slot 68 is very small compared with the axial dimension of the annular chamber. In practice, the disc 54 may be pushed onto the drive shaft 52 until it contacts the annular lip 66, the slot 68 then being provided as a result of axial play in the bearings of the motor 50. The width of the slot is sufficiently small to make it impossible for a stream of liquid to flow across the surface of the disc 54 without contacting the lip 66. The maximum width of the slot may, for example, be 0.1 millimetre.

The radially outer portion of each passage 58 constitutes a socket for receiving an end fitting 70 of the supply tube 38.

The end of the fluid supply line 18 away from the handle 12 is provided with a plug element for connection to a source of fluid to be sprayed.

In use of the equipment, the fluid supply line 18 is connected to a container of fluid and the bracket 8 is connected to the battery 10 by nuts 24. The control rocker of the tap 20 is depressed to allow liquid, such as herbicide, from the container to descend under the action of gravity through the handle 12 and the supply tube 38 to the spraying head 6, where it passes through the end fitting 70 and the restrictor passage 62 into the cavity 64. Power is supplied from the battery 10 to the motor 50 to spin the disc 54 at a speed between 200 and 4000 r.p.m., as controlled by a voltage regulator (not shown). The liquid flows as an annular stream through the aperture 68 and is ejected by centrifugal force from the disc 54 over the entire periphery of the disc. The cooperation between the disc 54 and the body 48 provides a pumping action which promotes the flow of herbicide through the jet 60. The width of the annular gap 68 is carefully selected, in dependence of the viscosity of the liquid to be sprayed, as as to ensure that an even distribution of the liquid reaches the disc to achieve all-round spraying. The lip 66 provides a wiping action over the surface of the disc 54 to spread the herbicide over the disc. Thus, even though the herbicide is admitted to the cavity 64 at a single point and the disc has a relatively small diameter, even distribution can be obtained.

The discs are a simple push fit on the output shaft 52 of the motor 50. However, in order to withdraw a disc from the output shaft 52 without damaging the periphery of the disc, a suitable tool may be provided for insertion into the passage 56. For example, the tool may comprise a screw threaded shank and the passage 56, at least at the end away from the output shaft 52, may be tapped to receive the shank.

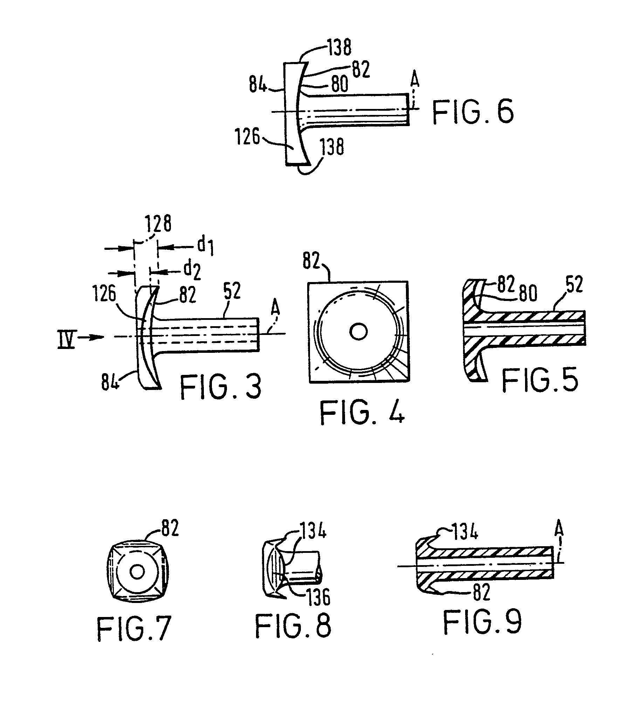

The disc 54 is shown in more detail in Figures 3 to 5. It has a fluid receiving surface 80 having a square outer periphery 82 as viewed parallel to the rotary axis of the disc (Figure 4). This shape is achieved by cutting segments from a circular disc, and consequently the periphery of the disc is defined by four flat side surfaces 126 (Figure 3). Each surface 126 has the shape of a crescent, tapering to points at the corners of the disc. Alternatively (Figure 6), the surfaces 126 could meet each other at common edges 138 which extend parallel to the rotary axis A of the disc.

In operation, the liquid flows over the periphery 82 of the disc midway along each side surface 126 (i.e. at the radially innermost part of the periphery) and migrates to the corners of the disc over the surfaces 126. The liquid is then thrown off as droplets from the edges 138 at which the surfaces 126 meet each other.

Because the fluid-receiving surface 80 (i.e. that surface over which liquid flows during use of the disc) is concave, the periphery 82 of the disc does not lie in a single transverse plane. Instead the periphery 82 at the corners of the square is further from a notional plane 128 passing through the end face 84 of the disc than are points on the periphery of the disc midway between the corners. In other words, as shown in Figure 3, the dimension $d_1$ is greater than the dimension $d_2$. The length of each side of the square may be 12 mm. Good results are achieved if the diameter of the lip 66 is also approximately 12 mm.

In the embodiment of Figures 7 to 9, the periphery 82, as viewed along the axis A of the disc, is again generally square, although somewhat barrelled. This configuration is achieved by bending segments of a circular disc into a more axial position, and again has the effect of positioning different portions of the periphery at different positions along the axis A of the disc. The bent-back portions 134 are provided, both inside and outside, with grooves 136 which lie in planes perpendicular to the axis of the disc.

The discs illustrated in Figure 3 to 9 result, in operation, in fine liquid droplets of consistent size. It is believed that this effect is achieved because the shapes of the discs create turbulence in their vicinity which causes liquid being discharged from them to collide with parts of the rapidly rotating disc and so to broken into fine droplets.

Although the present invention has been described with reference to the spraying of herbicides, it is also suitable for other spraying operations, such as the spraying of lubricants or coating compositions such as varnish.

Spraying equipment as described herein is also described and claimed in my copending European Patent Application No. 83307290.3.

## Claims

1. A spraying disc for use in spraying equipment, the disc (54) having a fluid-receiving surface (80) which has a substantially polygonal outer periphery (82), the disc being rotatable, in use, about a rotary axis (A) to discharge fluid from the outer periphery (82) of the fluid receiving surface (80), characterized in that different portions of the outer periphery (82) are at different distances $(d_1, d_2)$ from a plane (128) perpendicular to the rotary axis (A), the fluid-receiving surface (80) meeting, at the outer periphery (82), a plurality of side surfaces (126) which extend substantially parallel to the rotary axis (A).

2. A spraying disc as claimed in claim 1, characterized in that the outer periphery (82) is square.

3. A spraying disc as claimed in claim 2, characterized in that the length of each side of the outer periphery (82) is 12 mm.

4. A spraying disc as claimed in any one of the preceding claims, characterized in that the side surfaces (126) meet an end surface (84) which extends perpendicularly to the rotary axis (A).

5. A spraying disc as claimed in any one of the preceding claims, characterized in that each side surface (126) is crescent-shaped as viewed in a direction perpendicular to that side surface (126).

6. A spraying disc as claimed in any one of claims 1 to 4, characterized in that adjacent side surfaces (126) meet each other at a common edge (138) which is parallel to the rotary axis (A).

7. A spraying disc as claimed in claim 6, characterized in that respective portions of the outer periphery (82) defining each side surface (126), as viewed in a direction perpendicular to that side surface, are concavely arcuate.

8. A spraying disc as claimed in claim 1 or 2, characterized in that respective portions of the outer periphery (82) defining each side surface (126), as viewed in a direction perpendicular to that side surface, are convexly arcuate.

**Patentansprüche**

1. Sprühscheibe für eine Zerstäubungseinrichtung, wobei die Scheibe (54) eine zur Aufnahme von Flüssigkeit bestimmte Oberfläche, (80) besitzt, welche einen im wesentlichen polygonen äusseren Randbereich (82) aufweist, und im Betriebzustand um eine Drehachse (A) drehbar ist, um Flüssigkeit vom Randbereich (82) der zur Aufnahme von Flüssigkeit bestimmten Oberfläche (80 auszutragen, dadurch gekennzeichnet, dass unterschiedliche Bereiche des äusseren Randbereiches (82) in unterschiedlichen Abständen (d₁, d₂) von einer senkrecht zur Drehachse (A) verlaufenden Ebene (128) angeordnet sind und dass die zur Aufnahme von Flüssigkeit bestimmte Oberfläche (80) im äusseren Randbereich (82) mit einer Vielzahl von Seitenflächen (126) zusammentrifft, die sich im wesentlichen parallel zur Drehachse (A) erstrecken.

2. Sprühscheibe nach Anspruch 1, dadurch gekennzeichnet, dass der äussere Randbereich (82) viereckig ist.

3. Sprühscheibe nach Anspruch 2, dadurch gekennzeichnet, dass die Länge einer jeden Seite des äusseren Randbereiches (82) 12 mm beträgt.

4. Sprühscheibe nach einem der vorangehenden Patentansprüche, dadurch gekennzeichnet, dass die Seitenflächen (126) mit einer Endoberfläche (84) zusammentreffen, welche sich senkrecht zur Drehachse (A) erstreckt.

5. Sprühscheibe nach einem der vorangehenden Patentansprüche, dadurch gekennzeichnet, dass jede Seitenfläche (126) eine mondförmige Gestalt aufweist, wenn sie in einer Richtung senkrecht zu ihr betrachtet wird.

6. Sprühscheibe nach einem der Patentansprüche 1 bis 4, dadurch gekennzeichnet, dass benachbarte Seitenfläche (126) an einer gemeinsamen Kante (138) aufeinander treffen, welche parallel zur Drehachse (A) verläuft.

7. Sprühscheibe nach Patentanspruch 6, dadurch gekennzeichnet, dass den einzelnen Seitenflächen (126) entsprechende Bereiche des äusseren Randbereiches (82) bei Betrachtung in einer Richtung senkrecht zu der betreffenden Seitenfläche konkav gebogen erscheinen.

8. Sprühscheibe nach Patentanspruch 1 oder 3, dadurch gekennzeichnet, dass den einzelnen Seitenflächen (126) entsprechende Bereiche des äusseren Randbereiches (82) bei Betrachtung in einer Richtung senkrecht zu der betreffenden Seitenfläche konvex gebogen erscheinen.

**Revendications**

1. Un disque de pulvérisation destiné à être utilisé dans un équipement de pulvérisation, le disque (54) présentant une surface (80) d'arrivée du fluide, qui présente une périphérie externe (82) sensiblement polygonale, le disque pouvant être entraîné en rotation lors de l'utilisation, autour d'un axe de rotation (A), pour évacuer le fluide à partir de la périphérie externe (82) de la surface (80) d'arrivée du fluide, caractérisé en ce que différentes parties de la périphérie externe (82) sont à des distances différentes (d₁, d₂) d'un plan (128) perpendiculaire à l'axe de rotation (A), la surface (80) d'arrivée du fluide recontrant, à la périphérie externe (82) plusieurs surfaces latérales (126) qui s'étendent de manière sensiblement parallèle à l'axe de rotation (A).

2. Un disque de pulvérisation comme revendiqué à la revendication 1, caractérisé en ce que la périphérie externe (82) est carrée.

3. Un disque de pulvérisation comme revendiqué à la revendication 2, caractérisé en ce que la longueur de chaque côté de la périphérie externe (82) est de 12 mm.

4. Un disque de pulvérisation comme revendiqué à l'une quelconque des revendications précédentes, caractérisé en ce que les surfaces latérales (126) recontrent une surface d'extrémité (84) qui s'étend perpendiculairement à l'axe de rotation (A).

5. Un disque de pulvérisation comme revendiqué à l'une quelconque des revendications précédentes, caractérisé en ce que chaque surface latérale (126) est en forme de croissant, tel qu'observé dans une direction perpendiculaire à cette surface latérale (126).

6. Un disque de pulvérisation comme revendiqué à l'une quelconque des revendications 1 à 4, caractérisé en ce que des surfaces latérales adjacentes (126) se rencontrent mutuellement au niveau d'un bord commun (138) qui est parallèle à l'axe de rotation (A).

7. Un disque de pulvérisation comme revendiqué à la revendication 6, caractérisé en ce que différentes parties de la périphérie externe (82) délimitant chaque surface (126), tel qu'observé dans une direction perpendiculaire à cette surface latérale, sont courbées de façon concave.

8. Un disque de pulvérisation comme revendiqué à la revendication 1 ou 2, caractérisé en ce que différentes parties de la périphérie externe (82) délimitant chaque surface latérale (126), tel qu'observé dans une direction perpendiculaire à cette surface latérale, sont courbées de façon convexe.

FIG.1

FIG.2

1

FIG. 6

FIG. 3

FIG. 4

FIG.5

FIG.7

FIG.8

FIG.9